# EUROPÄISCHE PATENTSCHRIFT

(11) **EP 2 486 275 B1**
(45) Veröffentlichungstag und Bekanntmachung des Hinweises auf die Patenterteilung: **09.09.2015**
(21) Anmeldenummer: 10740533.4
(22) Anmeldetag: 27.07.2010
(51) Int. Cl.: F03D 11/02

(54) **ANTRIEBSSTRANG UND WINDKRAFTANLAGE**
DRIVE TRAIN AND WIND TURBINE
CHAÎNE CINÉMATIQUE ET ÉOLIENNE

(30) Priorität: 08.10.2009 DE 102009048735
(43) Veröffentlichungstag der Anmeldung: 15.08.2012
(73) Patentinhaber: Robert Bosch GmbH, 70469 Stuttgart (DE)
(72) Erfinder: VATH, Andreas, 63849 Leidersbach (DE); KLEIN, Andreas, 58455 Witten (DE); NOLLER, Klaus, 71570 Oppenweiler (DE); BERGER, Günter, 44577 Castrop-Rauxel (DE)
(74) Vertreter: Thürer, Andreas
(86) Internationale Anmeldenummer: PCT/EP2010/004576
(87) Internationale Veröffentlichungsnummer: WO 2011/042079

(56) Entgegenhaltungen:
- EP-A2- 1 128 064
- EP-A2- 2 216 547
- WO-A1-2004/007954
- WO-A2-2005/103489
- WO-A2-2009/052825
- DE-A1-102007 012 408

## Beschreibung

Die vorliegende Erfindung betrifft einen Antriebsstrang zur Umwandlung der Energie einer Fluidströmung in elektrische Energie, wie er z.B. bei einer Windkraftanlage Verwendung findet, gemäß dem Oberbegriff des Anspruchs 1. Die vorliegende Erfindung betrifft ferner eine Windkraftanlage mit einem solchen Antriebsstrang.

Herkömmliche Windkraftanlagen und der jeweils darin angeordnete Antriebsstrang werden mittlerweile möglichst kompakt aufgebaut. Dazu ist es zweckdienlich die Komponenten des Antriebsstrangs mit ihren Wellen, welche die Rotationsbewegung von einer auf die nächste Komponente übertragen, möglichst auf oder entlang einer gemeinsamen geometrischen Achse anzuordnen. Ein Beispiel für solche Antriebsstranganordnungen in Windkraftanlagen zeigt z.B. die DE 10 2007 012 408 A1. Die Wellen von Generator und Getriebe sind jeweils hohl. Eine Versorgungsleitung zur Anbindung von elektrischen Komponenten in der Rotornabe ist durch die jeweiligen Wellen von Generator und Getriebe hindurchgeführt.

Eine wichtige Komponente für die Betriebssicherheit der Anlage ist eine mechanische Bremse, mit der die drehenden Komponenten der Windkraftanlage, also u.A. der im Wind angeordnete Rotor, zum Stillstand abgebremst werden können und auch ggf. gegen aerodynamische Antriebskräfte gehalten werden können. Eine solche Bremse ist bei Anlagen mit Getriebe üblicherweise aus Sicht des Rotors hinter dem Getriebe angeordnet, da hier im Vergleich zu einer Anordnung am Rotors oder an der Welle des Rotors geringere Bremsmomente aufzubringen sind.

Bei herkömmlichen Anlagen sind die Abtriebswelle des Getriebes und die Rotorwelle des Rotors radial versetzt, sodass eine Durchführung von Leitungen nur durch eine Hohlwelle des Getriebes erfolgen muss. Die üblicherweise als Vollwelle ausgeführte Übertragungswelle zwischen Getriebe und Generator trägt die Bremsscheibe einer Scheibenbremse.

WO 2009/052825 A2 beschreibt einen Antriebsstrang für eine Windkraftanlage. Der Antriebsstrang umfasst einen Rotor zum transformieren von Wind in eine Drehung einer Rotornabe, um ein Antriebsdrehmoment bereitzustellen, einen Generator zum Umwandeln von mindestens einem Teil des Antriebsdrehmoments in elektrische Leistung, und zumindest eine Kupplung zur Verbindung einer ersten Antriebsstrang-Komponente mit einer zweiten Antriebsstrang-Komponente zum Übertragen des Antriebsdrehmoments zwischen den Komponenten.

WO 2004/007954 A1 offenbart eine Windenergieanlage und eine Lageranordnung dafür.

WO 2005/103489 A2 beschreibt eine Windkraftanlage, die die Größe des Antriebsstrangs und der Gondel unter Beibehaltung der Leistungselektronik und des Transformators an der Spitze des Turms. Die Turbine weist einen direkten Antriebsgenerator mit einer integrierten Scheibenbremse auf.

Es ist die Aufgabe der Erfindung einen Antriebsstrang anzugeben, der zum einen kompakt gebaut werden kann und der zum anderen eine vorteilhafte Anordnung einer mechanischen Bremse vorsieht.

Diese Aufgabe wird durch einen Antriebsstrang, welcher die Merkmale des Anspruchs 1 aufweist, gelöst.

Bei dem Antriebsstrang zur Nutzung der Energie einer Fluidströmung, z.B. in einer Windenergieanlage, ist ein durch die Fluidströmung antreibbarer Rotor, ein Getriebe, welches eingangsseitig direkt oder auch indirekt über die Rotorwelle oder weitere Komponenten an den Rotor angeschlossen ist, und ein an das Getriebe ausgangsseitig angeschlossener Generator vorhanden. Eine Ausgangswelle des Getriebes und eine Antriebswelle des Generators sind jeweils durchgängig hohl, wobei die genannten Wellen im Wesentlichen koaxial zueinander angeordnet sind, und wobei eine Leitung z.B. zur Energieversorgung, Druckmittelversorgung und/oder Kommunikation vorhanden ist, welche von einer gegenüber dem Rotor ortsfesten Bezugsstruktur ausgehend durch beide hohlen Wellen hindurch in den Rotor geführt ist. Es ist eine Bremse - z.B. eine Scheibenbremse - vorhanden, welche mechanisch an eine der beiden genannten Wellen angekoppelt ist.

Auf diese Weise sind auch bei einer Anlage, bei denen die Wellen von Generator und Getriebe als Hohlwellen ausgeführt sind, und welche koaxial angeordnet sind, die gängigen Sicherheitsvorgaben erfüllt. Eine Versorgung bzw. Anbindung von Komponenten in der Rotornabe kann auf die bewährte Art und Weise mit durch eine Hohlwelle geführten Leitungen erfolgen.

Wenn die Bremsscheibe auf der Welle des Generators angeordnet ist, lassen sich Bremse und Generator als Baueinheit kombinieren. Die Hohlwelle des Generators muss ohnehin für dem Bremsmoment entsprechende Antriebsmomente ausgelegt sein, sodass gegenüber einer separaten Welle für die Bremse eine Materialeinsparung erfolgt. Eine zweiseitige Herausführung der Generatorwelle ist technisch einfach zu bewältigen, sodass die Bremse an einem freien Ende der Generatorwelle mit wenig Aufwand montiert werden kann. Zudem kann vorteilhafterweise eine Anordnung der Bremse im Generatorgehäuse erfolgen, um so eine hohe bauliche Integration zu bewirken.

Bei einer Anordnung der Bremse auf der Getriebeausgangswelle kann ebenfalls eine separate Übertragungswelle entfallen. Weiter ist es vorteilhaft, die Bremse ins Gehäuse des Getriebes zu integrieren, da so eine kompakte Bauweise erzielt wird.

Vorzugsweise stützt sich die Bremse am Gehäuse des Generators und/oder des Getriebes ab, sodass eine eigene Stützstruktur für die Bremse entfallen kann.

Eine mechanische Ankopplung an ein Getriebegehäuse oder ein Generatorgehäuse ist insbesondere bei einer hoch integrierten Bauweise des Antriebsstrangs, wie ihn die eingangs erwähnte DE 10 2007 012 408 A1 zeigt, oder wie ihn die von der Anmelderin eingereichte Deutsche Patentanmeldung mit dem Aktenzeichen 10 2009 008 340.5 zeigt, vorteilhaft. Demnach dient ein Komponentengehäuse einer Antriebsstrangkomponente als Tragstruktur für andere Antriebsstrangkomponenten. Die zusätzliche Nutzung dieses Komponentengehäuses als mechanische Anbindung bzw. Abstützpunkt für die Bremsanlage erlaubt eine weitere Integration des Abtriebsstrangs.

Die Bremse kann natürlich auch auf einer Tragstruktur der Gondel abgestützt sein, und ist damit auch für herkömmliche Anlagenkonzepte geeignet.

Die Erfindung wird nachstehend anhand der Ausführungsbeispiele unter Bezugnahme auf die begleitenden Zeichnungen näher erläutert.
Fig. 1 zeigt eine schematische Seitenansicht eines Antriebsstrangs einer Windkraftanlage bei der eine Bremsscheibe auf der Welle des Generators angeordnet ist, und
Fig. 2 zeigt eine schematische Seitenansicht eines Antriebsstrangs einer Windkraftanlage bei der eine Bremsscheibe auf der Ausgangswelle des Getriebes angeordnet ist.

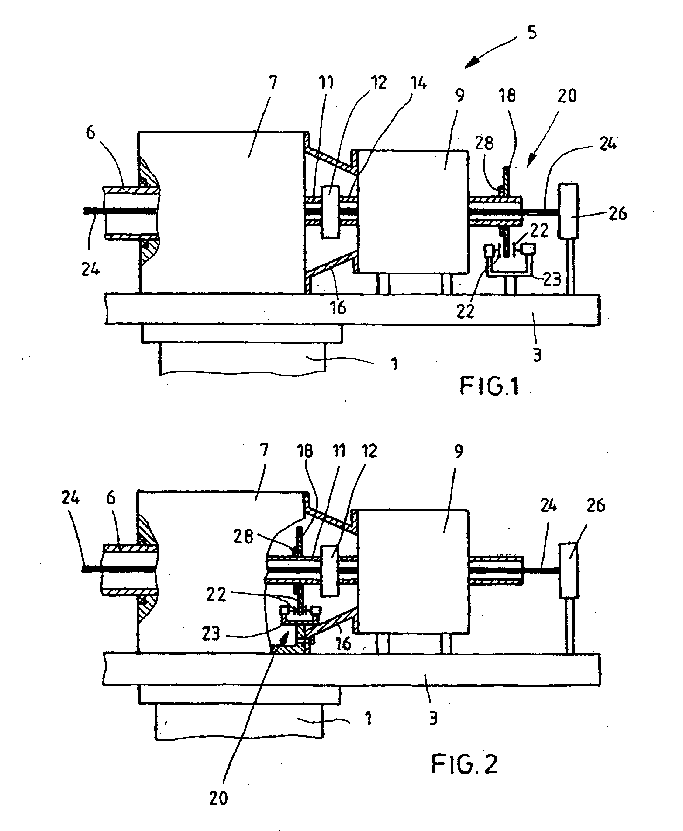

In Figur 1 ist der Antriebsstrang 5 einer Windkraftanlage auf einer Tragplatte 3 montiert, welche wiederum um eine Azimutachse drehbar auf einem Turm 1 befestigt ist. Die Tragplatte 3 ist Bestandteil einer Gondel, in welcher die Komponenten des Antriebsstrangs 5 baulich zusammengefasst sind. Der Antriebsstrang 5 besitzt einen vom Wind angetriebenen Rotor (nicht dargestellt). Der Rotor ist mit einer Rotornabe an einer Rotorwelle 6 befestigt. Die Welle 6 des Rotors ist in ein Untersetzungsgetriebe 7 geführt. Zudem ist die Welle 6 als Hohlwelle ausgeführt. Das Getriebe 7 besitzt eine Ausgangswelle 11. Die Ausgangswelle 11 ist über eine Kopplungseinrichtung 12 mit einer Welle 14 eines Generators 9 gekoppelt. Das Getriebe 7 und der Generator 9 sind über Befestigungseinrichtungen, z.B. Bolzen, Stützen etc. mit der Tragplatte 3 verbunden.

Zwischen dem Getriebe 7 und dem Generator 9 kann alternativ oder zusätzlich ein Zwischengehäuse oder eine Flanschverbindung 16 als Fortsetzung des Generatorgehäuses oder des Getriebegehäuses vorhanden sein, welche diese Komponenten bzw. deren Gehäuse mechanisch miteinander verbindet. Dabei kann z.B. das Gehäuse des Getriebes 7 die Funktion der Tragstruktur 3 übernehmen - so dass diese entfallen kann - und selbst an den Turm 1 angekoppelt sein, während die weiteren Komponenten des Antriebsstrangs, wie z.B. der Generator 9 am Getriebegehäuse angeflanscht sind.

Die Kopplungseinrichtung 12 dient zur drehfesten Verbindung der beiden Wellen 11 und 14. Sie kann z.B. durch eine Bogenzahnkupplung gebildet sein. Es kann aber auch eine schaltbare Kupplung, z.B. eine Scheibenkupplung verwendet werden.

Die Welle 14 des Generators 9 ist auf beiden Seiten aus dem Gehäuse des Generators 9 herausgeführt. Auf der dem Getriebe 7 abgewandten Seite des Generators 9 ist auf der Welle 14 eine Scheibe 18 einer Bremsanlage 20 befestigt. Zur Befestigung der Scheibe 18 auf der Welle 14 ist eine Trägerscheibe 28 vorgesehen. Die Scheibe 18 ist an der Trägerscheibe 28 z.B. durch Schraubverbindungen befestigt. Die Trägerscheibe 28 ist auf der Welle 14 mit einem Pressverband befestigt. Dies kann z.B. durch Aufschrumpfen der Trägerscheibe 28 auf die Welle 14 erfolgen. Für den ruhenden Teil der Bremsanlage 20 sind exemplarisch zwei Bremsbacken 22 mit Bremszylindern gezeichnet. Die Bremsbacken 22 und Bremszylinder sind an einem Träger 23 befestigt. Der Träger 23 ist auf der Tragplatte 3 montiert. Alternativ kann der Träger 23 auch am Gehäuse des Generators 9 befestigt sein. Dazu wäre z.B. ein bremsenseitiger Deckel des Generators 9 mit einer Befestigungsfläche zu versehen und mechanisch entsprechend stabil auszubilden.

Die Wellen 6 des Rotors, 14 des Generators 9, und ggf. im Getriebe 7 auf der geometrischen Achse der Wellen 6 und 14 zentral angeordnete Wellen, wie z.B. die Ausgangswelle 11 sind als Hohlwellen ausgeführt. Neben der Gewichtsersparnis erlaubt diese Bauform der Wellen 6, 11, 14 das Durchführen von Versorgungsleitungen 24 von einem drehfesten Teil des Antriebsstrangs 5, z.B. von der Tragplatte 3 oder einer anderen Gondelstruktur ausgehend in die rotierende Nabe des Rotors. Die Versorgungsleitungen 24 sind z.B. elektrische Leitungen zur Versorgung von Pitchantrieben mit elektrischer Energie, zur Versorgung von im Rotor angeordneten Sensoren mit Energie und zur Übertragung von Daten von bzw. zu im Rotor angeordneten Komponenten, wie z.B. geregelten Pitchantrieben, Sensoren, etc. Die Versorgungsleitungen 24 können auch Rohrleitungen für Kühlmittel oder eine hydraulische Druckflüssigkeit umfassen. Bei hydraulischen Pitchantrieben kann darüber eine Druckmittelversorgung sichergestellt werden. Die Leitungen 24 sind über einen Überträger 26 an die Tragstruktur 3 angebunden. Der Überträger 26 umfasst z.B. Schleifringe für elektrische Leitungen oder eine Drehkupplung für hydraulische Leitungen.

Eine weitere Variante des erfindungsgemäßen Ausführungsbeispiels eines Antriebsstrangs 5 einer Windkraftanlage ist in der Figur 2 dargestellt. Dieser Antriebsstrang 5 unterscheidet sich von dem in Figur 1 dargestellten Antriebsstrang im Wesentlichen in der Anordnung der Bremsanlage 20. Die nachfolgende Beschreibung bezeiht sich vorwiegend auf diesen Unterschied. Für gleiche Merkmale wurden gleiche Bezugszeichen verwendet.

Der Antriebsstrang 5 besitzt wiederum einen Rotor, von dem ausgehend eine Rotorwelle 6 in das Getriebe 7 geführt ist. Die Ausgangswelle 11 des Getriebes 7 ist durch die Kopplungseinrichtung 12 mit der Welle 14 des Generators 9 verbunden. Die Wellen 11, 14 und 6 und ggf. in dem Getriebe zusätzlich vorhandene auf derselben geometrischen Achse angeordnete Zwischenwellen sind als Hohlwellen ausgeführt. Die Versorgungsleitungen 24 dienen einer Versorgung bzw. einer elektrischen oder datentechnischen Anbindung von Komponenten in der Rotornabe, wie in Zusammenhang mit Fig. 1 bereits beschrieben.

In der Variante gemäß Figur 2 ist nun die Bremsscheibe 18 mit der Ausgangswelle 11 des Getriebes 7 verbunden. Dazu ist die Trägerscheibe 28 auf der Welle 11 befestigt, und die Bremsscheibe 18 ist ihrerseits an der Trägerscheibe 28 befestigt. Der feststehende Teil der Bremsanlage 20, also Bremsbacken 22 und Bremszylinder sind über den Träger 23 am Gehäuse des Generators 7 befestigt.

Im vorliegenden Beispiel ist die Bremsanlage 20 in das Gehäuse des Getriebes 7 eingelassen. Die Bremsanlage könnte jedoch alternativ in das Gehäuse des Generators integriert werden, oder z.B. mit der Flanschverbindung 16 zwischen Getriebe 7 und Generator 9 ein eigenes Gehäuse erhalten.

Die Bremsanlage 20 kann sich mit ihren feststehenden Komponenten z.B. über den Träger 23 an einer Tragplatte 3, oder am Gehäuse des Getriebes 7, dort an der Innenseite, ggf. mit einer eigenen verstärken Stützstruktur oder Stützrippe, an der Außenseite, oder am Gehäuse des Generators 9 abstützen. Eine mechanische Ankopplung an ein Getriebegehäuse oder ein Generatorgehäuse ist insbesondere bei einer hoch integrierten Bauweise des Antriebsstrangs, wie ihn die eingangs erwähnte DE 10 2007 012 408 A1 zeigt, oder wie ihn die von der Anmelderin eingereichte Deutsche Patentanmeldung mit dem Aktenzeichen 10 2009 008 340.5 zeigt, vorteilhaft. Demnach dient ein Komponentengehäuse einer Antriebsstrangkomponente als Tragstruktur für andere Antriebsstrangkomponenten. Die zusätzliche Nutzung dieses Komponentengehäuses als mechanische Anbindung bzw. Abstützpunkt für die Bremsanlage erlaubt eine weitere Integration des Abtriebsstrangs. Die Anordnung der Bremsscheibe 18 bzw. allgemeiner der umlaufenden Komponente/n der Bremsanlage 20 auf einer Hohlwelle erlaubt die sichere und bewährte Anbindung von Komponenten in der Rotornabe über Leitungen an die feststehenden Strukturen der Gondel.

Die vorliegende Erfindung betrifft einen Antriebsstrang z.B. in einer Windenergieanlage. Eine Ausgangswelle des Getriebes und eine Antriebswelle des Generators sind jeweils durchgängig, wobei die genannten Wellen im Wesentlichen koaxial zueinander angeordnet sind, und wobei eine Leitung vorhanden ist, welche von einer gegenüber dem Rotor ortsfesten Bezugsstruktur ausgehend durch beide hohlen Wellen hindurch in den Rotor geführt ist. Es ist eine Bremse - z.B. eine Scheibenbremse - vorhanden, welche mechanisch an eine der beiden genannten Wellen angekoppelt ist. Auf diese Weise sind auch bei einer Anlage, bei denen die Wellen von Generator und Getriebe als Hohlwellen ausgeführt sind, und welche koaxial angeordnet sind, die gängigen Sicherheitsvorgaberi erfüllt. Eine Versorgung bzw. Anbindung von Komponenten in der Rotornabe kann auf die bewährte Art und Weise mit durch eine Hohlwelle geführten Leitungen erfolgen.

Die vorangehend beschriebenen Ausführungsbeispiele und Figuren dienen lediglich dem besseren Verständnis der vorliegenden Erfindung, sie schränken die Erfindung nicht etwa auf die Ausführungsbeispiele ein. Die Figuren sind teilweise grob schematisch gehalten, der Effekt bzw. die Auswirkungen zum Teil deutlich vergrößert bzw. übertrieben dargestellt, um die Funktionsweisen, Wirkprinzipien, technischen Ausgestaltungen und Merkmale zu verdeutlichen. Grundsätzlich kann jede Funktionsweise, jedes Prinzip, jede technische Ausgestaltung und jedes Merkmal, welches/welche in den Figuren oder im Text gezeigt ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem Offenbarungsumfang der Erfindung hinzuzurechnen sind. Dabei sind auch Kombinationen zwischen allen einzelnen Ausführungen im Text, d.h. in jedem Abschnitt des Beschreibungstexts, in den Ansprüchen und auch Kombinationen zwischen verschiedenen Ausführungsbeispielen im Text, in den Ansprüchen und in den Figuren umfasst.

Auch die Ansprüche begrenzen bzw. limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen der Erfindung von dieser Offenbarung umfasst.

### Bezugszeichenliste

- 1: Turm
- 3: Tragplatte
- 5: Antriebsstrang
- 6: Rotorwelle
- 7: Getriebe
- 9: Generator
- 11: Ausgangswelle des Getriebes
- 12: Kopplungseinrichtung
- 14: Welle des Generators
- 16: Flanschverbindung
- 18: Bremsscheibe
- 20: Bremsanlage
- 22: Bremsbacke
- 23: Träger
- 24: Versorgungsleitungen
- 26: Überträger
- 28: Trägerscheibe

## Patentansprüche

1. Antriebsstrang zur Nutzung der Energie einer Fluidströmung, insbesondere in einer Windenergieanlage, umfassend einen durch die Fluidströmung antreibbaren Rotor, ein Getriebe (7), welches eingangsseitig an den Rotor angeschlossen ist, und einen an das Getriebe (7) ausgangsseitig angeschlossenen Generator (9), wobei eine Ausgangswelle (11) des Getriebes und eine Antriebswelle (14) des Generators (9) jeweils hohl sind, wobei die genannten Wellen (11, 14) im Wesentlichen koaxial zueinander angeordnet sind, und wobei eine Leitung (24) vorhanden ist, welche von einer gegenüber dem Rotor ortsfesten Bezugsstruktur ausgehend durch beide hohlen Wellen (11, 14) hindurch in den Rotor geführt ist, wobei eine Bremse (20) vorhanden ist, welche mechanisch an eine der beiden genannten Wellen (11, 14) angekoppelt ist,
**dadurch gekennzeichnet, dass**
die Bremse (20) in einem Zwischengehäuse oder einer Flanschverbindung (16) zwischen dem Generator (9) und dem Getriebe (7) angeordnet ist und sich ein drehfestes Bremselement, insbesondere eine Haltestruktur (23) mit darin eingebetteten Bremsbacken (22), an dem Gehäuse des Generators (9) und/oder des Getriebes (7) abstützt.

2. Antriebsstrang nach Anspruch 1, **dadurch gekennzeichnet, dass** auf der hohlen Antriebswelle (14) des Generators (9) ein umlaufendes Bremselement, insbesondere eine Bremsscheibe (18), angeordnet ist.

3. Antriebsstrang nach Anspruch 1, **dadurch gekennzeichnet, dass** auf der hohlen Ausgangswelle (11) des Getriebes (7) ein umlaufendes Bremselement, insbesondere eine Bremsscheibe (18), angeordnet ist.

4. Antriebsstrang nach einem der vorhergehenden Ansprüche, **dadurch gekennzeichnet, dass** sich ein drehfestes Bremselement, insbesondere eine Haltestruktur (23) mit darin eingebetteten Bremsbacken (22), an einer Tragstruktur (3) des Antriebsstrangs, auf der z.B. der Generator (7) und/oder das Getriebe (11) montiert sind, insbesondere an einer Gondelstruktur, abstützt.

5. Antriebsstrang nach Anspruch 2, **dadurch gekennzeichnet, dass** die Bremse (20) an der dem Getriebe (7) abgewandten Stirnseite des Generators (9) angeordnet ist.

6. Antriebsstrang nach Anspruch 5, **dadurch gekennzeichnet, dass** die Bremse (20) im Gehäuse des Generators (9) angeordnet ist.

7. Antriebsstrang nach einem der Ansprüche 1 bis 4, **dadurch gekennzeichnet, dass** die Bremse (20) im Gehäuse des Getriebes (7) angeordnet ist.

8. Windkraftanlage, **gekennzeichnet durch** einen Antriebsstrang nach einem der Ansprüche 1 bis 7.

## Claims

1. Drive train for using the energy of a fluid flow, in particular in a wind turbine, comprising a rotor which can be driven by the fluid flow, a gearing (7) which is connected on the input side to the rotor, and a generator (9) which is connected to the output side of the gearing (7), wherein an output shaft (11) of the gearing and a drive shaft (14) of the generator (9) are in each case hollow, wherein said shafts (11, 14) are arranged essentially coaxially with respect to one another, and wherein a line (24) is present which is guided into the rotor from a reference structure that is positionally fixed with respect to the rotor, passing through both hollow shafts (11, 14), wherein a brake (20) is present which is mechanically coupled to one of the two said shafts (11, 14),
**characterized in that**
the brake (20) is arranged in an intermediate housing or a flange connection (16) between the generator (9) and the gearing (7) and a rotationally fixed brake element, in particular a retaining structure (23) with brake shoes (22) embedded therein, is supported on the housing of the generator (9) and/or of the gearing (7).

2. Drive train according to Claim 1, **characterized in that** a circumferential brake element, in particular a brake disc (18), is arranged on the hollow drive shaft (14) of the generator (9).

3. Drive train according to Claim 1, **characterized in that** a circumferential brake element, in particular a brake disc (18), is arranged on the hollow output shaft (11) of the gearing (7).

4. Drive train according to one of the preceding claims, **characterized in that** a rotationally fixed brake element, in particular a retaining structure (23) with brake shoes (22) embedded therein, is supported on a supporting structure (3) of the drive train, on which are mounted e.g. the generator (9) and/or the gearing (7), in particular on a gondola structure.

5. Drive train according to Claim 2, **characterized in that** the brake (20) is arranged on that end side of the generator (9) that is oriented away from the gearing (7).

6. Drive train according to Claim 5, **characterized in that** the brake (20) is arranged in the housing of the generator (9).

7. Drive train according to one of Claims 1 to 4, **characterized in that** the brake (20) is arranged in the housing of the gearing (7).

8. Wind turbine, **characterized by** a drive train according to one of Claims 1 to 7.

## Revendications

1. Chaîne cinématique pour l'utilisation de l'énergie d'un écoulement fluidique, en particulier dans une éolienne, comprenant un rotor pouvant être entraîné par l'écoulement fluidique, une boîte de vitesses (7) qui est raccordée du côté de l'entrée au rotor et un générateur (9) raccordé du côté de la sortie à la boîte de vitesses (7), un arbre de sortie (11) de la boîte de vitesses et un arbre d'entraînement (14) du générateur (9) étant respectivement creux, lesdits arbres (11, 14) étant disposés essentiellement coaxialement l'un à l'autre, et une conduite (24) étant prévue, laquelle est guidée dans le rotor à travers les deux arbres creux (11, 14) depuis une structure de référence fixe par rapport au rotor, un frein (20) étant prévu, lequel est raccordé mécaniquement à l'un desdits deux arbres (11, 14),
**caractérisée en ce que**
le frein (20) est disposé dans un boîtier intermédiaire ou un raccord à bride (16) entre le générateur (9) et la boîte de vitesses (7) et un élément de frein solidaire en rotation, en particulier une structure de retenue (23) avec des mâchoires de frein (22) encastrées dans celle-ci, s'appuie contre le boîtier du générateur (9) et/ou de la boîte de vitesses (7).

2. Chaîne cinématique selon la revendication 1, **caractérisée en ce qu'**un élément de frein périphérique, en particulier un disque de frein (18), est disposé sur l'arbre d'entraînement creux (14) du générateur (9).

3. Chaîne cinématique selon la revendication 1, **caractérisée en ce qu'**un élément de frein périphérique, en particulier un disque de frein (18), est disposé sur l'arbre de sortie creux (11) de la boîte de vitesses (7).

4. Chaîne cinématique selon l'une quelconque des revendications précédentes, **caractérisée en ce qu'**un élément de frein solidaire en rotation, en particulier une structure de retenue (23) avec des mâchoires de frein (22) encastrées dans celle-ci, s'appuie contre une structure porteuse (3) de la chaîne cinématique sur laquelle par exemple le générateur (9) et/ou la boîte de vitesses (7) sont montés, en particulier sur une structure de gondole.

5. Chaîne cinématique selon la revendication 2, **caractérisée en ce que** le frein (20) est disposé du côté frontal du générateur (9) opposé à la boîte de vitesses (7).

6. Chaîne cinématique selon la revendication 5, **caractérisée en ce que** le frein (20) est disposé dans le boîtier du générateur (9).

7. Chaîne cinématique selon l'une quelconque des revendications 1 à 4, **caractérisée en ce que** le frein (20) est disposé dans le boîtier de la boîte de vitesses (7).

8. Eolienne, **caractérisée par** une chaîne cinématique selon l'une quelconque des revendications 1 à 7.
